# EUROPÄISCHE PATENTANMELDUNG

(11) **EP 1 989 940 A2**
(43) Veröffentlichungstag der Anmeldung: **12.11.2008**
(21) Anmeldenummer: 08008498.1
(22) Anmeldetag: 06.05.2008
(51) Int. Cl.: A01L 15/00

(54) **Vorrichtung zum Reinigen von Hufen eines Huftiers**

(30) Priorität: 10.05.2007 DE 102007021886
(71) Anmelder: Schmidt, Martina, 37139 Adelebsen-Eberhausen (DE)
(72) Erfinder: Schmidt, Udo, 37139 Adelebsen-Eberhausen (DE)
(74) Vertreter: Wagner, Carsten

(57) **Zusammenfassung**

Eine erfindungsgemäße Vorrichtung (2) zum Reinigen von Hufen eines Huftieres weist wenigstens ein um eine Drehachse (10) drehbar gelagertes, drehantreibbares bürstenartiges Element (6) auf, mittels dessen die Hufe des Huftieres reinigbar sind. Vorzugsweise ist eine Mehrzahl zueinander beabstandeter bürstenartiger Elemente (6, 8) vorgesehen, die durch motorische Antriebsmittel drehantreibbar sind. Die erfindungsgemäße Vorrichtung (2) ermöglicht auf einfache und kraftsparende Weise eine Reinigung von Hufen eines Huftieres.

## Beschreibung

Die Erfindung betrifft eine Vorrichtung der im Oberbegriff des Anspruchs 1 genannten Art zum Reinigen von Hufen eines Huftiers.

Es ist allgemein bekannt, daß die Hufe von Huftieren in regelmäßigen Abständen gereinigt werden müssen. Um die Hufe des Huftiers zu reinigen, werden manuell betätigte Bürsten benutzt, mit denen jeder Huf einzeln gereinigt werden muß.

Ein gravierender Nachteil besteht darin, daß dieser Vorgang mit einem hohen Zeitaufwand verbunden ist. Ein weiterer Nachteil besteht darin, daß dieser Vorgang auch sehr anstrengend ist, weil jedes Bein des Huftieres während des Hufreinigungsvorgangs manuell angehoben werden muß.

Eine Reinigungsbürste für Pferdehufe ist durch DE 79 12 698 U1 bekannt.

Durch DE 87 10 013 U1 ist eine elektrische Kleiderbürste bekannt, die eine Mehrzahl von um eine Drehachse drehbar gelagerten, drehantreibbaren bürstenartigen Elementen aufweist.

Durch DE 11 69 413 A ist eine Früchtebearbeitungs-und/oder -sortiervorrichtung bekannt, die eine Mehrzahl von um eine Drehachse drehbar gelagerten, drehantreibbaren bürstenartigen Elementen aufweist, mittels derer Früchte, insbesondere Zitrusfrüchte, reinig- und transportierbar sind.

Der Erfindung liegt die Aufgabe zugrunde, eine Vorrichtung der im Oberbegriff des Anspruchs 1 genannten Art anzugeben, die es ermöglicht, den physischen und zeitlichen Aufwand beim Reinigen von Hufen eines Huftiers zu verringern.

Diese Aufgabe wird durch die im Anspruch 1 angegebene Lehre gelöst.

Der Grundgedanke der erfindungsgemäßen Lehre besteht darin, die Hufe eines Huftiers maschinell zu reinigen. Hierzu sieht die erfindungsgemäße Lehre eine Vorrichtung mit mindestens einem drehantreibbaren bürstenartigen Element vor, das sich erfindungsgemäß unterhalb eines gitterartigen Trennelementes befindet. Die Borsten des bürstenartigen Elementes oder der bürstenartigen Elemente ragen aus dem gitterartigen Trennelement derart hervor, daß sie in Kontakt mit einem Huf eines auf dem Trennelement stehenden oder laufenden Huftieres bringbar sind, so daß die Hufe des Huftieres bei einer Drehung des bürstenartigen Elements oder der bürstenartigen Elemente mittels der Borsten ausgekratzt und so gereinigt werden.

Die erfindungsgemäße Lehre sieht ein gitterartiges Trennelement vor, durch das Borsten des bürstenartigen Elements oder der bürstenartigen Elemente derart hervortreten, daß sie in Kontakt mit einem Huf eines auf dem Trennelement stehenden oder laufenden Huftieres bringbar sind. Bei dieser Ausführungsform steht oder läuft das Huftier auf dem Trennelement, das beispielsweise als Rost ausgebildet sein kann, während die Hufe des Huftieres mittels der bürstenartigen Elemente gereinigt werden. Wenn in Laufrichtung des Huftieres eine ausreichend große Anzahl von bürstenartigen Elementen aufeinanderfolgt, ist es bei dieser Ausführungsform ausreichend, wenn das Huftier zur Reinigung seiner Hufe über das Trennelement läuft oder geführt wird. Falls demgegenüber nur eine relativ geringe Anzahl von aufeinanderfolgenden bürstenartigen Elementen vorgesehen ist, so wird das Huftier zum Reinigen seiner Hufe so plaziert, daß sich die zu reinigenden Hufe über den bürstenartigen Elementen befinden.

Ein besonderer Vorteil der erfindungsgemäßen Lehre besteht darin, daß aufgrund des automatisierten Hufreinigungsvorgangs dem Benutzer ein erheblicher zeitlicher sowie auch physischer Aufwand erspart wird.

Die erfindungsgemäße Vorrichtung ist zum Reinigen von Hufen beliebiger Huftiere geeignet. Besonders gut ist die erfindungsgemäße Vorrichtung zum Reinigen von Hufen von Pferden geeignet.

Eine besonders vorteilhafte Weiterbildung der erfindungsgemäßen Lehre sieht vor, daß das bürstenartige Element durch motorische Antriebsmittel drehantreibbar ist. Aufgrund des motorischen Drehantriebs ist bei dieser Ausführungsform der Zeit- und Kraftaufwand beim Reinigen von Hufen noch weiter verringert. Es ist erfindungsgemäß jedoch auch möglich, daß das bürstenartige Element von Hand drehantreibbar ist, wie dies eine andere Weiterbildung der erfindungsgemäßen Lehre vorsieht. Diese Ausführungsform ist besonders dann vorteilhaft, wenn das Reinigen von Hufen an einem Ort vollzogen werden soll, an dem beispielsweise kein Stromanschluß zur Verfügung steht.

Erfindungsgemäß ist es grundsätzlich ausreichend, wenn die erfindungsgemäße Vorrichtung ein einzelnes drehantreibbares bürstenartiges Element aufweist. Um die Reinigungswirkung der erfindungsgemäßen Vorrichtung weiter zu verbessern, ist gemäß einer anderen vorteilhaften Weiterbildung der erfindungsgemäßen Lehre eine Mehrzahl zueinander beabstandeter bürstenartiger Elemente vorgesehen. Bei dieser Ausführungsform können die bürstenartigen Elemente beispielsweise und insbesondere so angeordnet sein, daß sämtliche Hufe des Huftieres gleichzeitig gereinigt werden und sich so eine weitere Zeitersparnis ergibt.

Eine andere zweckmäßige Weiterbildung der erfindungsgemäßen Lehre sieht vor, daß die Drehachsen der bürstenartigen Elemente zueinander im wesentlichen parallel angeordnet sind.

Eine andere vorteilhafte Weiterbildung der erfindungsgemäßen Lehre sieht vor, daß die Drehachsen der bürstenartigen Elemente im wesentlichen horizontal angeordnet sind. Bei dieser Ausführungsform können die Hufe des Pferdes gereinigt werden, während das Pferd steht.

Eine weitere vorteilhafte Weiterbildung der erfindungsgemäßen Lehre sieht vor, daß nebeneinanderliegende bürstenartige Elemente mit einem gegenläufigen Drehsinn drehantreibbar sind. Auf diese Weise ist die Reinigungswirkung der erfindungsgemäßen Vorrichtung weiter verbessert.

Der Drehantrieb des bürstenartigen Elements oder der bürstenartigen Elemente kann in beliebiger geeigneter Weise ausgebildet sein. Um den Drehantrieb besonders einfach und damit kostengünstig sowie robust zu gestalten, sieht eine vorteilhafte Weiterbildung der erfindungsgemäßen Lehre vor, daß als Drehantrieb des bürstenartigen Elements oder der bürstenartigen Elemente wenigstens ein Riementrieb mit einem Treibriemen oder wenigstens ein Kettentrieb mit einer Kette vorgesehen ist.

Grundsätzlich ist es erfindungsgemäß möglich, die bürstenartigen Elemente mittels mehrerer Treibriemen oder Ketten unabhängig voneinander anzutreiben. Um den mechanischen Aufbau der erfindungsgemäßen Vorrichtung zu vereinfachen und die Vorrichtung damit kostengünstiger zu gestalten, sieht eine vorteilhafte Weiterbildung der erfindungsgemäßen Lehre jedoch vor, daß die bürstenartigen Elemente mittels des Treibriemens bzw. der Kette gemeinsam drehantreibbar sind.

Bei den vorgenannten Ausführungsformen kann der Treibriemen beispielsweise als Reibriemen ausgebildet sein. Um Schlupf zwischen dem Treibriemen und den bürstenartigen Elementen zu vermeiden, sieht eine vorteilhafte Weiterbildung der erfindungsgemäßen Lehre vor, daß der Treibriemen als Zahnriemen ausgebildet ist. Bei dieser Ausführungsform ist dem oder jedem bürstenartigen Element eine Verzahnung zugeordnet, beispielsweise in Form eines drehfest mit dem bürstenartigen Element verbundenen Zahnrades.

Eine andere vorteilhafte Weiterbildung der erfindungsgemäßen Lehre sieht vor, daß die Spannung des Treibriemens bzw der Kette durch Einstellmittel einstellbar ist. Ein Vorteil dieser Ausführungsform besteht darin, daß der Treibriemen bzw. die Kette entspannt werden kann, was beispielsweise den Austausch des Treibriemens bzw. der Kette erleichtert.

Eine andere vorteilhafte Weiterbildung der erfindungsgemäßen Lehre sieht vor, daß der Treibriemen bzw. die Kette aufeinanderfolgende bürstenartige Elemente mäanderförmig umschlingt. Bei dieser Ausführungsform werden jeweils zwei aufeinanderfolgende bürstenartige Elemente durch den Treibriemen bzw. die Kette mit einem unterschiedlichen Drehsinn drehangetrieben.

Eine vorteilhafte Weiterbildung der vorgenannten Ausführungsform sieht vor, daß der Abstand zwischen dem Trennelement und der Drehachse des bürstenartigen Elements bzw. den Drehachsen der bürstenartigen Elemente einstellbar ist. Durch Einstellung dieses Abstandes ist einstellbar, wie weit Borsten des oder jedes bürstenartigen Elements bei der Drehung des bürstenartigen Elements über das Trennelement hervortreten. Auf diese Weise ist die erfindungsgemäße Vorrichtung daran anpaßbar, ob beispielsweise die Hufe von beschlagenen oder unbeschlagenen Pferden gereinigt werden sollen. Bei der Reinigung von Hufen von beschlagenen Pferden wird der Abstand zwischen dem Trennelement und der Drehachse des bürstenartigen Elements verringert, so daß Borsten des bürstenartigen Elements weiter über das Trennelement hervortreten als bei der Reinigung von Hufen von unbeschlagenen Pferden.

Grundsätzlich ist es erfindungsgemäß möglich, Material, das mittels des bürstenartigen Elements oder der bürstenartigen Elemente aus den Hufen des Huftieres entfernt worden ist, von Hand abzutransportieren. Um die Benutzung der erfindungsgemäßen Vorrichtung weiter zu vereinfachen und noch komfortabler zu gestalten, sieht eine vorteilhafte Weiterbildung der erfindungsgemäßen Lehre ein Förderband zum Auffangen und Fördern von Material vor, das mittels des bürstenartigen Elements oder der bürstenartigen Elemente aus dem Huf entfernt worden ist. Bei dieser Ausführungsform wird das aus den Hufen entfernte Material mittels des Förderbandes automatisch abgefördert.

Die Erfindung wird nachfolgend anhand der beigefügten Zeichnung näher erläutert, in der ein Ausführungsbeispiel dargestellt ist. Dabei bilden alle beanspruchten, beschriebenen und in der Zeichnung nicht dargestellten Merkmale für sich genommen oder in beliebiger Kombination miteinander den Gegenstand der Erfindung, unabhängig von ihrer Zusammenfassung in den Patentansprüchen sowie unabhängig von ihrer Beschreibung bzw. Darstellung in der Zeichnung.

Es zeigt:
- Fig. 1: eine schematisierte Seitenansicht eines Ausführungsbeispieles einer erfindungsgemäßen Vorrichtung,
- Fig. 2: eine Draufsicht auf das Ausführungsbeispiel gemäß Fig. 1 und
- Fig. 3: in gegenüber Fig. 1 vergrößertern Maßstab eine Seitenansicht eines bürstenartigen Elements der Vorrichtung gemäß Fig. 1.

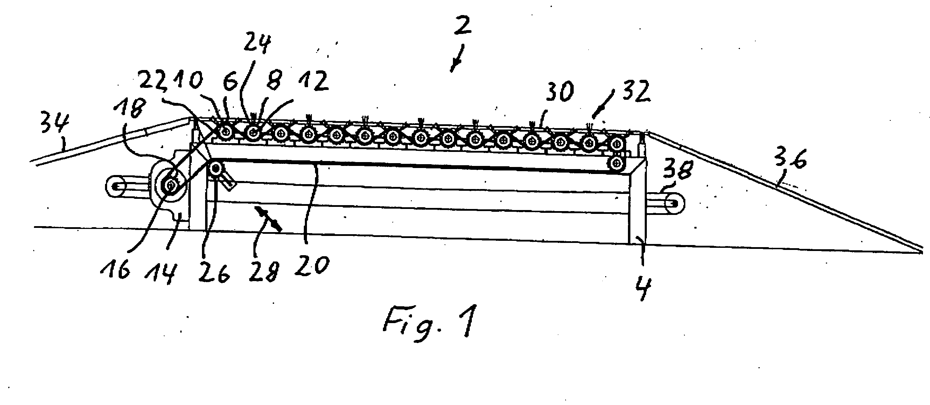

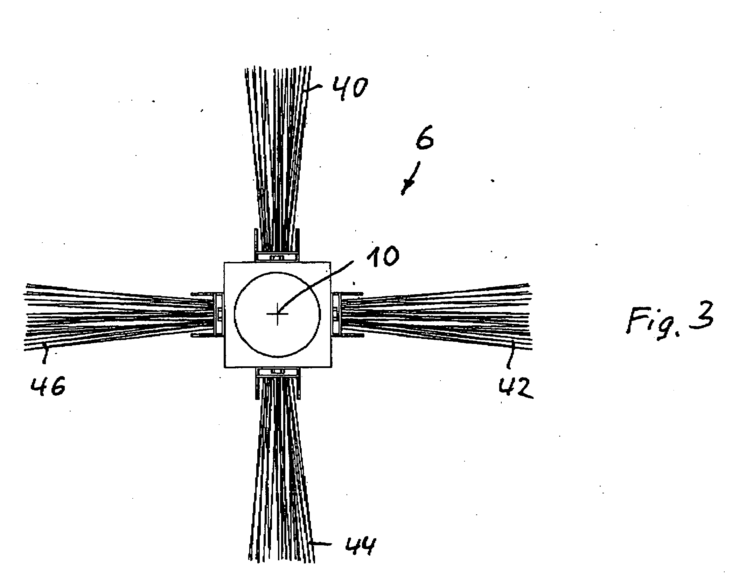

In Fig. 1 ist ein Ausführungsbeispiel einer erfindungsgemäßen Vorrichtung 2 zum Reinigen von Hufen eines in der Zeichnung nicht dargestellten Huftieres dargestellt, die bei diesem Ausführungsbeispiel einen rahmenartigen Grundkörper 4 aufweist. Erfindungsgemäß ist bei diesem Ausführungsbeispiel eine Mehrzahl von in Längsrichtung des Grundkörpers 4 aufeinanderfolgenden, drehbar gelagerten, drehantreibbaren bürstenartigen Elementen vorgesehen, von denen in Fig. 1 lediglich zwei bürstenartige Elemente mit den Bezugszeichen 6 bzw. 8 versehen sind. Die weiteren in der Zeichnung dargestellten bürstenartigen Elemente sind entsprechend aufgebaut und werden hier nicht näher erläutert. Die bürstenartigen Elemente 6, 8, die weiter unten anhand von Fig. 3 näher erläutert werden, sind jeweils um eine bei diesem Ausführungsbeispiel horizontal angeordnete Drehachse 10, 12 drehbar an dem Grundkörper 4 der Vorrichtung 2 gelagert.

Bei diesem Ausführungsbeispiel sind die bürstenartigen Elemente 6, 8 durch motorische Antriebsmittel drehantreibbar, die einen Elektromotor 14 aufweisen, mit dessen Abtriebswelle 16 ein Kettenrad 18 drehfest verbunden ist. Zur Übertragung des Antriebsdrehmoments des Elektromotors 14 auf die bürstenartigen Elemente 6, 8 sowie die weiteren bürstenartigen Elemente ist bei diesem Ausführungsbeispiel ein Kettentrieb mit einer Kette 20 vorgesehen, der antriebsseitig mit dem Kettenrad 18 und abtriebsseitig mit Kettenrädern 22 bzw. 24 in Eingriff steht, die drehfest mit dem bürstenartigen Element 6 bzw. dem bürstenartigen Element 8 verbunden sind.

Bei diesem Ausführungsbeispiel ist die Spannung der Kette 20 durch Einstellmittel einstellbar, die bei diesem Ausführungsbeispiel ein Spannkettenrad 26 aufweisen, das in Richtung eines Doppelpfeiles 28 verstellbar und arretierbar an dem Grundkörper 4 gelagert ist.

Wie aus Fig. 1 ersichtlich ist, umschlingt die Kette 20 aufeinanderfolgende bürstenartige Elemente mäanderförmig, so daß jeweils zwei nebeneinanderliegende der bürstenartigen Elemente 6, 8 mit einem gegenläufigen Drehsinn drehantreibbar sind.

Die Vorrichtung 2 weist bei diesem Ausführungsbeispiel ferner ein gitterartiges Trennelement 30 auf, durch das Borsten der bürstenartigen Elemente derart hervorstehen, daß sie in Kontakt mit einem Huf eines auf dem Trennelement 30 stehenden oder laufenden Huftieres bringbar sind, wie dies in Fig. 1 beispielsweise bei dem Bezugszeichen 32 angedeutet ist. Um mittels der erfindungsgemäßen Vorrichtung 2 die Hufe sowohl von beschlagenen als auch von unbeschlagenen Huftieren wirksam zu reinigen, ist der Abstand des Trennelements 30 von den Drehachsen 10, 12 der bürstenartigen Elemente 6, 8 einstellbar, so daß entsprechend dem jeweils eingestellten Abstand Borsten der bürstenartigen Elemente 6, 8 bei ihrer Drehung mehr oder weniger stark über das Trennelement 30 hervortreten.

Um ein Huftier zum Reinigen seiner Hufe auf das Trennelement 30 zu führen und nach dem Reinigen der Hufe von dem Trennelement 30 herunterzuführen, weist die Vorrichtung 2 bei diesem Ausführungsbeispiel zwei Rampen 34, 36 auf, die an den in Längsrichtung gelegenen Enden des Grundkörpers 4 angeordnet sind.

Ferner ist bei diesem Ausführungsbeispiel ein Stetigförderer in Form eines Förderbandes 38 zum Auffangen und Fördern von Material vorgesehen, das mittels der bürstenartigen Elemente 6, 8 aus einem Huf des Huftieres entfernt worden ist. Das Förderband wird bei diesem Ausführungsbeispiel durch den Elektromotor 14 angetrieben.

Die Vorrichtung 2 weist ferner Spannungsversorgungsmittel und Steuerungsmittel für den Elektromotor 14 auf, die in der Zeichnung jedoch nicht dargestellt sind.

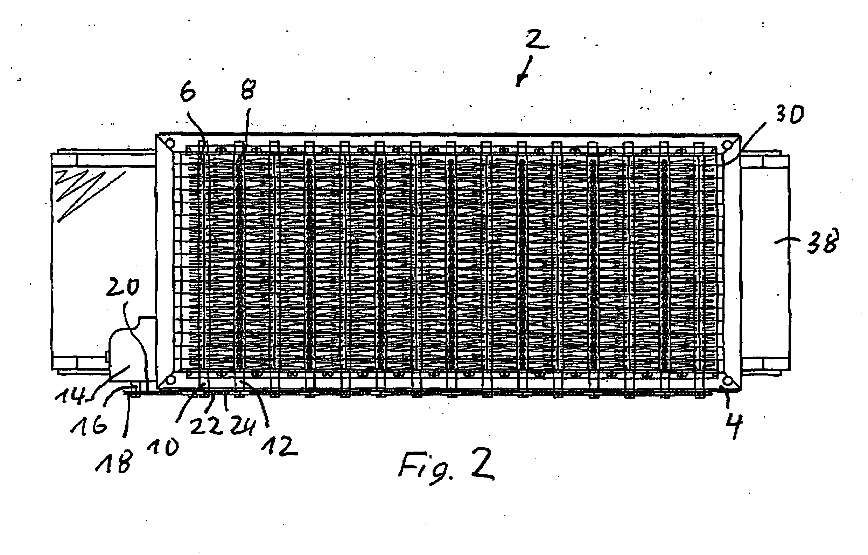

Fig. 2 zeigt eine Ansicht von oben auf die Vorrichtung 2, wobei erkennbar ist, daß das Trennelement 30 gitterartig ausgebildet ist.

Fig. 3 zeigt eine vergrößerte Seitenansicht des bürstenartigen Elements 6, das mehrere, nämlich bei dem dargestellten Ausführungsbeispiel vier in Umfangsrichtung zueinander Borstenbüschel 40, 42, 44 und 46 aufweist. Das Material der Borstenbüschel 40 bis 46 ist so gewählt, daß einerseits ein Auskratzen der Hufe des Huftieres ermöglicht ist, andererseits aber eine Verletzung des Huftieres verhindert ist. Bei dem dargestellten Ausführungsbeispiel bestehen die Borsten der Borstenbüschel 40 bis 46 aus einem Kunststoffmaterial.

Die Funktionsweise der erfindungsgemäßen Vorrichtung 2 ist wie folgt:

Zum Reinigen der Hufe eines Huftieres wird das Huftier über die Rampe 34 auf das Trennelement 30 geführt, wobei die bürstenartigen Elemente 6, 8 durch den Elektromotor 14 drehangetrieben sind. Gelangt das Huftier mit einem Huf in den Bereich eines der bürstenartigen Elemente 6, 8, so kratzen die bürstenartigen Elemente 6, 8 den Huf des Huftieres bei ihrer Drehung aus, wobei das aus dem Huf entfernte Material auf das Förderband 38 fällt und abgefördert wird. Wird das Huftier in Längsrichtung der Vorrichtung 2 über das Trennelement 30 geführt, so gelangen nacheinander unterschiedliche der bürstenartigen Elemente mit dem Huf in Eingriff, so daß die Reinigungswirkung weiter verbessert ist. Wird das Huftier entsprechend langsam über das Trennelement 30 geführt, so befinden sich aufeinanderfolgende der bürstenartigen Elemente 6, 8 entsprechend lange in Eingriff mit dem Huf, so daß der Huf vollständig gereinigt ist, wenn das Huftier das Trennelement 30 über die Rampe 36 verläßt. Bei dem in Fig. 1 dargestellten Ausführungsbeispiel ist die Reinigungswirkung dadurch verbessert, daß jeweils nebeneinanderliegende der bürstenartigen Elemente 6, 8 in einem gegenläufigen Drehsinn drehangetrieben sind.

Das aus den Hufen entfernte Material kann mittels des Förderbandes 38 zu einem weiteren Stetigförderer, beispielsweise einem Schneckenförderer, gefördert werden, der das Material beispielsweise weiter in eine Schubkarre fördert, die von Zeit zu Zeit von einem Benutzer der Vorrichtung manuell entleert wird.

Falls gewünscht können die Borsten derjenigen bürstenartigen Elemente, die zu der Rampe 36 benachbart angeordnet sind, weicher ausgebildet sein als die Borsten der übrigen bürstenartigen Elemente. Sie können bei ihrer Drehung durch eine nicht dargestellte Wanne laufen, die mit einem flüssigen oder pastösen Desinfektions- und/oder Hufreinigungsmittel gefüllt ist, so daß die Borsten das Desinfektions- und/oder Hufreinigungsmittel auf die gereinigten Hufe auftragen.

Die erfindungsgemäße Vorrichtung 2 ermöglicht somit auf einfache und für den Benutzer kraftsparende Weise das Reinigen von Hufen eines Huftieres. Dadurch, daß die Hufe mittels der erfindungsgemäßen Vorrichtung 2 besonders sorgfältig gereinigt werden, sind Krankheiten oder Beschwerden, die auf verunreinigte Hufe zurückzuführen sind, zuverlässig vermieden, insbesondere bei Nutztieren. Die erfindungsgemäße Vorrichtung 2 weist damit eine hohe soziale Nützlichkeit auf.

## Patentansprüche

1. Vorrichtung (2) zum Reinigen von Hufen eines Huftiers,
mit wenigstens einem um eine Drehachse (10) drehbar gelagerten, drehantreibbaren bürstenartigen Element (6), mittels dessen die Hufe des Huftiers reinigbar sind,
wobei ein gitterartiges Trennelement (30) vorgesehen ist, durch das Borsten des bürstenartigen Elementes oder der bürstenartigen Elemente (6, 8) derart hervortreten, daß sie in Kontakt mit einem Huf eines auf dem Trennelement (30) stehenden oder laufenden Huftieres bringbar sind.

2. Vorrichtung nach Anspruch 1, **dadurch gekennzeichnet, daß** das bürstenartige Element (6) durch motorische Antriebsmittel drehantreibbar ist.

3. Vorrichtung nach Anspruch 1 oder 2, **dadurch gekennzeichnet, daß** das bürstenartige Element (6) von Hand drehantreibbar ist.

4. Vorrichtung nach einem der vorhergehenden Ansprüche, **dadurch gekennzeichnet, daß** eine Mehrzahl zueinander beabstandeter bürstenartiger Elemente (6, 8) vorgesehen ist.

5. Vorrichtung nach Anspruch 4, **dadurch gekennzeichnet, daß** die Drehachsen (10, 12) der bürstenartigen Elemente (6, 8) zueinander im wesentlichen parallel angeordnet sind.

6. Vorrichtung nach Anspruch 4 oder 5, **dadurch gekennzeichnet, daß** die Drehachsen (10, 12) der bürstenartigen Elemente (6, 8) im wesentlichen horizontal angeordnet sind.

7. Vorrichtung nach einem der Ansprüche 4 bis 6, **dadurch gekennzeichnet, daß** nebeneinanderliegende, bürstenartige Elemente (6, 8) mit einem gegenläufigen Drehsinn drehantreibbar sind.

8. Vorrichtung nach einem der vorhergehenden Ansprüche, **dadurch gekennzeichnet, daß** als Drehantrieb des bürstenartigen Elementes oder der bürstenartigen Elemente (8, 8) wenigstens ein Riementrieb mit einem Treibriemen oder wenigstens ein Kettentrieb mit einer Kette (20) vorgesehen ist.

9. Vorrichtung nach Anspruch 8, **dadurch gekennzeichnet, daß** die bürstenartigen Elemente (6, 8) mittels des Treibriemens bzw. der Kette (20) gemeinsam drehantreibbar sind.

10. Vorrichtung nach Anspruch 8 oder 9, **dadurch gekennzeichnet, daß** der Treibriemen als Zahnriemen ausgebildet ist.

11. Vorrichtung nach einem der Ansprüche 8 bis 10, **dadurch gekennzeichnet, daß** die Spannung des Treibriemens bzw. der Kette (20) durch Einstellmittel einstellbar ist.

12. Vorrichtung nach einem der Ansprüche 8 bis 11, **dadurch gekennzeichnet, daß** der Treibriemen bzw. die Kette (20) aufeinanderfolgende bürstenartige Elemente (6, 8) mäanderförmig umschlingt.

13. Vorrichtung nach Anspruch 1, **dadurch gekennzeichnet, daß** der Abstand zwischen dem Trennelement (30) und der Drehachse (10) des bürstenartigen Elements (6) bzw. der Drehachsen (10, 12) der bürstenartigen Elemente (6, 8) einstellbar ist.

14. Vorrichtung nach einem der vorhergehenden Ansprüche, **dadurch gekennzeichnet, daß** ein Förderband (38) zum Auffangen und Fördern von Material vorgesehen ist, das mittels des bürstenartigen Elementes oder der bürstenartigen Elemente (6, 8) aus einem Huf des Huftieres entfernt worden ist.

15. Verwendung wenigstens eines drehantreibbaren bürstenartigen Elementes zur Reinigung von Hufen eines Huftieres.
